# EUROPÄISCHE PATENTSCHRIFT

(11) **EP 2 399 007 B1**
(45) Veröffentlichungstag und Bekanntmachung des Hinweises auf die Patenterteilung: **29.10.2014**
(21) Anmeldenummer: 10702889.6
(22) Anmeldetag: 10.02.2010
(51) Int. Cl.: F01L 1/047

(54) **NOCKENWELLE**
CAMSHAFT
ARBRE À CAMES

(30) Priorität: 19.02.2009 DE 102009009664
(43) Veröffentlichungstag der Anmeldung: 28.12.2011
(73) Patentinhaber: Mahle International GmbH, 70376 Stuttgart (DE)
(72) Erfinder: SCHNEIDER, Falk, 70825 Korntal-Münchingen (DE); FLENDER, Thomas, 71296 Heimsheim (DE); KREISIG, Michael, 70197 Stuttgart (DE)
(74) Vertreter: BRP Renaud & Partner mbB Rechtsanwälte Patentanwälte Steuerberater
(86) Internationale Anmeldenummer: PCT/EP2010/051614
(87) Internationale Veröffentlichungsnummer: WO 2010/094601

(56) Entgegenhaltungen:
- EP-A1- 1 860 336
- EP-A1- 1 995 417
- DE-A1- 3 445 715
- DE-A1- 3 643 673
- DE-A1- 19 844 203
- DE-A1-102005 020 236

## Beschreibung

Die vorliegende Erfindung betrifft eine Nockenwelle einer Brennkraftmaschine mit wenigstens einer Transportsicherung. Die Erfindung betrifft außerdem eine mit einer derartigen Nockenwelle ausgestattete Brennkraftmaschine.

Nockenwellen in Brennkraftmaschinen sind hinlänglich bekannt und dienen zum Steuern der Öffnungszeiten von Ein- und Auslassventilen. Die Montage einer Nockenwelle in einem Zylinderkopf einer Brennkraftmaschine gestaltet sich dabei oftmals relativ aufwändig, da die Nockenwelle vor dem Einbau ausgerichtet werden muss. Der Aufwand zum Ausrichten kann bspw. dadurch reduziert werden, dass zur Anlieferung der Nockenwelle an einen Einbauort Transportsicherungen verwendet werden, welche jedoch generell den Nachteil aufweisen, dass diese nach dem Einbau der Nockenwelle in den Zylinderkopf der Brennkraftmaschine wieder entfernt werden müssen, um so einen einwandfreien Betrieb der Nockenwelle in der Brennkraftmaschine gewährleisten zu können.

Aus der DE 198 44 203 A1 ist eine Nocken- oder Kurbelwelle einer Brennkraftmaschine bekannt, die mit geteilten Wälzlagern derart gelagert ist, dass die eine äußere Laufbahn bildenden Halbschalen unverlierbar miteinander verbunden sind und Mittel zur axialen Führung der Lageranordnung vorhanden sind. Dadurch soll eine vormontierte Lager-Welleneinheit geschaffen werden.
Aus der DE102005020236 A1 ist eine Nockenwelle bekannt, bei der die Nockenträger während der Montage von einem Montagewerkzeug an ihrer Stelle gehalten werden. Die vorliegende Erfindung beschäftigt sich mit dem Problem, für eine Nockenwelle eine verbesserte Ausführungsform anzugeben, mit welcher sich insbesondere die Montage einer derartigen Nockenwelle in einer zugehörigen Brennkraftmaschine vereinfacht.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, zum Transport einer Nockenwelle eine Transportsicherung zu verwenden, die nach dem Einbau der Nockenwelle in eine Brennkraftmaschine nicht entfernt werden muss, sondern an der Nockenwelle verbleiben kann und sich beim Einlaufen der Brennkraftmaschine bspw. verschleißt oder eine chemische Reaktion auflöst und dadurch einen Freigang schafft. Im Unterschied zu herkömmlichen Transportsicherungen, welche nach dem Einbau der Nockenwelle in die Brennkraftmaschine aufwändig und dadurch teuer entfernt werden müssen, kann die erfindungsgemäße Transportsicherung an der Nockenwelle verbleiben, da sie sich - wie oben erwähnt - während der Einlaufphase der Brennkraftmaschine zumindest so weit auflöst bzw. zumindest so weit verschleißt, dass sie einen Freigang der Nockenwelle nicht mehr beeinträchtigt. Die erfindungsgemäße Transportsicherung kann bspw. aus einem öllöslichen und/oder wärmeempfindlichen Material, bspw. Kunststoff, ausgebildet sein, so dass sie während des Transports der Nockenwelle zur Fertigungsstätte zuverlässig ihre Sicherungsaufgaben übernehmen kann und durch das beim Betrieb der Brennkraftmaschine befindliche Öl bzw. die dann auftretende Wärme aufgelöst wird, so dass die erfindungsgemäße Transportsicherung auf denkbar einfachste Weise, das heißt ohne weiteres Zutun, beim Warmlaufen der Brennkraftmaschine entfernt bzw. soweit reduziert wird, dass sie einen Freigang der Nockenwelle bzw. eines Lagers derselben in keinster Weise mehr behindert.

Denkbar ist hier dabei insbesondere, dass die öllösliche und/oder wärmeempfindliche Transportsicherung während des Warmlaufens der Brennkraftmaschine vom darin zirkulierenden Öl aufgelöst bzw. ausgeschwemmt wird, gleichzeitig aber die Schmiereigenschaften des Öls nicht negativ beeinträchtigt. Denkbar ist auch, dass die wenigstens eine öllösliche bzw. wärmeempfindliche Transportsicherung in so kleine Teile aufgelöst wird, dass sie im gelösten Zustand gänzlich ohne negative Folgen im Öl verbleiben oder aber an einer Ölfiltereinrichtung abgeschieden werden kann. Mit der erfindungsgemäßen Transportsicherung lässt sich somit ein Einbau der Nockenwelle in eine Brennkraftmaschine deutlich vereinfachen, da die Transportsicherung nicht wie bisher üblich aufwendig entfernt werden muss.

Bei einer vorteilhaften Weiterbildung der erfindungsgemäßen Lösung, ist die wenigstens eine Transportsicherung im Siebdruckverfahren mit insbesondere öllöslicher und/oder wärmeempfindlicher Farbe hergestellt. Die wenigstens eine Transportsicherung kann in diesem Fall als auf einer Außenmantelfläche der Nockenwelle aufgedruckter ringförmiger oder gepunkteter Wulst ausgebildet sein, wobei eine Herstellung der wenigstens einen Transportsicherung im Siebdruckverfahren eine einerseits rationelle und damit kostengünstige und andererseits qualitativ äußerst hochwertige Herstellungsweise darstellt.

Bei einer weiteren vorteilhaften Ausführungsform der erfindungsgemäßen Lösung, ist die wenigstens eine Transportsicherung als mit der Nockenwelle verklebtes oder verstemmtes Ringelement ausgebildet. Ein derartiges Verbinden der wenigstens einen Transportsicherung mit der Nockenwelle bietet den großen Vorteil, dass diese ohne Einwirkung von Wärme und ohne Einwirkung eines erst beim Betrieb der Brennkraftmaschine zugesetzten Schmieröls einen festen Aggregatszustand einnimmt, bspw. als händisch leicht greifbarer Ring ausgebildet ist und dadurch bei der Montage äußerst einfach handzuhaben ist. Die beim Warmlaufen der Brennkraftmaschine auf die wenigstens eine Transportsicherung einwirkende Wärme bzw. der dann einwirkende chemische Angriff löst die wenigstens eine Transportsicherung auf bzw. reduziert deren Verschleißwiderstand signifikant, so dass durch mechanische Einwirkungen, Wärme und/oder chemische Reaktionen die Sicherungswirkung der wenigstens einen Transportsicherung aufgehoben und dadurch ein Freigang der Nockenwelle bzw. eines Lagers geschaffen wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch eine Nockenwelle mit einer erfindungsgemäßen und als Ring ausgebildeten Transportsicherung,
- Fig. 2: eine Darstellung wie in Fig. 1, wobei jedoch die ringartige Transportsicherung an einen Bund eines Nockens angeformt, insbesondere angespritzt, ist,
- Fig. 3: zwei ringartige Transportsicherungen im Bereich eines Lagers der Nockenwelle,
- Fig. 4: zwei jeweils als Ringwülste ausgebildete Transportsicherungen.

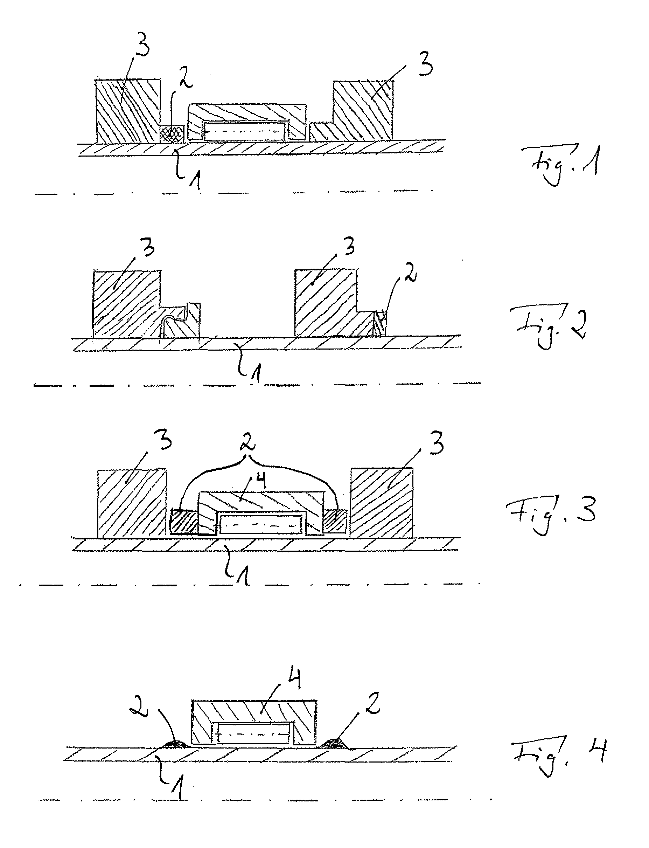

Entsprechend den Fig. 1 bis 4 weist eine Nockenwelle 1 jeweils zumindest eine erfindungsgemäße Transportsicherung 2 auf, welche bspw. im Bereich eines Nockens 3 (vgl. Fig. 1 und 2) und/oder im Bereich eines die Nockenwelle 1 lagernden Lagers 4 angeordnet ist. Die erfindungsgemäße Transportsicherung 2, von welchen je Nockenwelle 1 zumindest eine vorhanden ist, dient zur Fixierung, insbesondere zur Axialfixierung des Lagers 4 relativ zur Nockenwelle 1. Erfindungsgemäß ist nun die zumindest eine Transportsicherung 2 derart ausgebildet, dass sie beim Betrieb der Brennkraftmaschine, in welcher die Nockenwelle 1 eingebaut wird, durch ein Verschleißen oder ein sich Auflösen einen Freigang schafft. Dies kann bspw. dadurch erfolgen, dass die wenigstens eine Transportsicherung 2 aus einem öllöslichen und/oder wärmeempfindlichen Material, insbesondere aus einem derartigen Kunststoff, ausgebildet ist. Dies bietet den großen Vorteil, dass die Transportsicherung 2 während des Transports der Nockenwelle 1 zur Fertigung, das heißt während eines ölfreien und vergleichsweise kalten Zustands, zuverlässig ihre Sicherungsaufgaben übernimmt, während sie diese unter den Betriebsbedingungen, insbesondere beim Warmlaufen der Brennkraftmaschine, durch einen Verschleiß oder ein sich Auflösen verliert.

Erfindungsgemäß kann nun die wenigstens eine Transportsicherung 2 als mit der Nockenwelle 1 verklebtes oder verstemmtes Ringelement ausgebildet sein, wie dies bspw. gemäß der Fig. 1 dargestellt ist. Denkbar ist auch, dass die wenigstens eine Transportsicherung 2 mit dem Nocken 3 verbunden, insbesondere verklebt oder als ein axialer Bund eines derartigen Nockens 3 ausgebildet ist. Ein derartiger Zustand ist bspw. in der Fig. 2 gezeigt. Selbstverständlich ist auch denkbar, dass die wenigstens eine Transportsicherung mit dem Lager 4 verbunden, insbesondere mit diesem verklebt oder an dieses angespritzt ist.

Zusätzlich oder alternativ kann die wenigstens eine Transportsicherung 2 auch als Wulst auf der Nockenwelle 1 ausgebildet sein, wie dies bspw. gemäß der Fig. 4 dargestellt ist. In diesem Fall kann die wenigstens eine Transportsicherung 2 bspw. im Siebdruckverfahren mit insbesondere öllöslicher und/oder wärmeempfindlicher Farbe hergestellt werden. Eine derartige im Siebdruckverfahren hergestellte Transportsicherung 2 kann bspw. auf einer Außenmantelfläche der Nockenwelle 1, auf einer Lagerseitenfläche des Lagers 4, auf einer Lagerinnenfläche des Lagers 4 oder auf einer Seitenfläche eines Nockens 3 aufgebracht sein.

Denkbar ist auch, dass die Transportsicherung 2 einen öllöslichen Papierzellstoff aufweist und/oder als wärmeempfindlicher Kleber ausgebildet ist, über welchen die Nockenwelle 1 insbesondere mit einem der Lager 4 der Nockenwelle 1 verklebt ist.

Alle gezeigten und beschriebenen Ausführungsformen weisen dabei den großen Vorteil auf, dass die erfindungsgemäße Transportsicherung 2 einfach und kostengünstig herstellbar ist und ihre Sicherungsaufgaben während des Transports der Nockenwelle 1, bspw. zu einem Einbauort in eine Brennkraftmaschine, zuverlässig übernimmt. Durch die spezielle Materialauswahl kann die wenigstens eine Transportsicherung 2 darüber hinaus auch nach dem Einbau der Nockenwelle 1 in die Brennkraftmaschine an dieser verbleiben und muss nicht wie bisher üblich aufwendig entfernt werden. Während der Warmlaufphase der Brennkraftmaschine wird nun die wenigstens eine Transportsicherung 2 aufgrund einer chemischen Reaktion mit dem dann vorhandenen Schmieröl, aufgrund der beim Betrieb der Brennkraftmaschine auftretenden Wärme und/oder aufgrund von mechanischen Belastungen soweit aufgelöst bzw. verschlissen, dass sie einer freigängigen Lagerung der Nockenwelle in keinster Weise mehr im Wege steht. Theoretisch kann dabei auch ein Wälzlagerfett zur Vorpositionierung verwendet werden.

## Patentansprüche

1. Nockenwelle (1) einer Brennkraftmaschine mit wenigstens einer Transportsicherung (2) zur axialen Fixierung eines Lagers (4), **dadurch gekennzeichnet,dass** die Transportsicherung (2) aus einem öllöslichen und/oder wärmeempfindlichen Material ausgebildet ist und sich dadurch während der Einlaufphase der Brennkraftmaschine zumindest so weit auflöst bzw. zumindest so weit verschleißt, dass sie einen Freigang der Nockenwelle nicht mehr beeinträchtigt und dadurch nicht entfernt werden muss.

2. Nockenwelle nach Anspruch 1,**dadurch gekennzeichnet,dass** die wenigstens eine Transportsicherung (2) als mit der Nockenwelle (1) verklebtes oder verstemmtes Ringelement ausgebildet ist.

3. Nockenwelle nach Anspruch 1,**dadurch gekennzeichnet,dass** die wenigstens eine Transportsicherung (2) als Wulst auf der Nockenwelle (1) ausgebildet ist.

4. Nockenwelle nach einem der Ansprüche 1 bis 3,**dadurch gekennzeichnet,dass** die wenigstens eine Transportsicherung (2) mit einem Nocken (3) verbunden, insbesondere verklebt oder als axialer Bund eines Nockens (3) ausgebildet ist.

5. Nockenwelle nach einem der Ansprüche 1 bis 4,
**dadurch gekennzeichnet,**
**dass** die wenigstens eine Transportsicherung (2) aus Kunststoff, insbesondere aus einem öllöslichen und/oder wärmeempfindlichen Kunststoff ausgebildet ist und sich beim Betrieb der Brennkraftmaschine auflöst.

6. Nockenwelle nach einem der Ansprüche 1 bis 4,
**dadurch gekennzeichnet,**
**dass** die wenigstens eine Transportsicherung (2) im Siebdruckverfahren mit insbesondere öllöslicher und/oder wärmeempfindlicher Farbe hergestellt ist.

7. Nockenwelle nach Anspruch 6,
**dadurch gekennzeichnet,**
**dass** die im Siebdruckverfahren hergestellte Transportsicherung (2) auf einer Außenmantelfläche der Nockenwelle (1), auf einer Lagerseitenfläche eines Lagers (4) der Nockenwelle (1), auf einer Lagerinnenfläche des Lagers (4) der Nockenwelle (1) oder auf einer Seitenfläche eines Nockens (3) aufgebracht ist.

8. Nockenwelle nach einem der Ansprüche 1 bis 4,
**dadurch gekennzeichnet,**
**dass** die wenigstens eine Transportsicherung (2) als öllöslicher Papierzellstoff aufweisender und/oder wärmeempfindlicher Kleber ausgebildet ist, über welchen die Nockenwelle (1) insbesondere mit einem Lager (4) verklebt ist.

9. Brennkraftmaschine mit einer Nockenwelle (1) nach einem der Ansprüche 1 bis 8.

## Claims

1. A camshaft (1) of an internal combustion engine comprising at least one transport securing mechanism (2), in particular for axially fixing a bearing (4),
**characterized in**
**that** the transport securing mechanism (2) is formed from an oil-soluble and/or heat-sensitive material, and disintegrates or wears out during the run-in phase of the internal combustion engine at least to such an extent that it no longer impairs a release of the camshaft and not have to be removed.

2. The camshaft according to claim 1,
**characterized in**
**that** the at least one transport securing mechanism (2) is formed as ring element that is glued or caulked on the camshaft (1).

3. The camshaft according to claim 1,
**characterized in**
**that** the at least one transport securing mechanism (2) is formed as bead on the camshaft (1).

4. The camshaft according to any one of the claims 1 to 3,
**characterized in**
**that** the at least one transport securing mechanism (2) is connected to a cam (3), in particular glued, or is formed as axial collar of a cam (3).

5. The camshaft according to any one of the claims 1 to 4,
**characterized in**
**that** the at least one transport securing mechanism (2) is formed from plastic, in particular from an oil-soluble and/or heat-sensitive plastic and disintegrates during the operation of the internal combustion engine.

6. The camshaft according to any one of the claims 1 to 4,
**characterized in**
**that** the at least one transport securing mechanism (2) is produced using the screen printing method with in particular oil-soluble and/or heat-sensitive paint.

7. The camshaft according to claim 6,
**characterized in**
**that** the transport securing mechanism (2) produced using the screen printing method is applied on an outer surface area of the camshaft (1), on a bearing side surface of a bearing (4) of the camshaft (1), on an inner bearing surface of the bearing (4) of the camshaft (1) or on a side surface of a cam (3).

8. The camshaft according to any one of the claims 1 to 4,
**characterized in that** the at least one transport securing mechanism (2) is configured as adhesive which comprises oil-soluble pulp and/or is heat-sensitive and via which adhesive, the camshaft (1) is glued in particular to a bearing (4).

9. An internal combustion engine, comprising a camshaft (1) according to any one of the claims 1 to 8.

## Revendications

1. Arbre à cames (1) d'un moteur à combustion interne comportant au moins une fixation de transport (2) pour la fixation axiale d'un palier (4), caractérisé ce que la fixation de transport (2) est réalisée dans un matériau soluble dans l'huile et/ou sensible à la chaleur et se dissout ou s'use pendant la phase de mise en route du moteur à combustion interne jusqu'au point où il ne perturbe plus un accès libre à l'arbre à cames et ne doit donc plus être éliminé.

2. Arbre à cames selon la revendication 1, **caractérisé en ce que** au moins une fixation de transport (2) est conçue comme un élément annulaire collé ou serti avec l'arbre à cames (1).

3. Arbre à cames selon la revendication 1, **caractérisé en ce que** au moins une fixation de transport (2) est conçu comme un bourrelet sur l'arbre à cames (1).

4. Arbre à cames selon une des revendications 1 à 3, **caractérisé en ce que** au moins une fixation de transport (2) est conçue avec une came (3) reliée, notamment collée ou comme collerette axiale d'une came (3).

5. Arbre à cames selon un des revendications 1 à 4, **caractérisé en ce que** au moins une fixation de transport (2) est conçue en plastique, notamment dans un plastique soluble dans l'huile et/ou sensible à la chaleur et se dissout pendant le fonctionnement du moteur à combustion interne.

6. Arbre à cames selon un des revendications 1 à 4, caractérisé ce que au moins une fixation de transport (2) est fabriquée selon le procédé de sérigraphie avec notamment un colorant soluble dans l'huile et/ou sensible à la chaleur.

7. Arbre à cames selon la revendication 6, caractérisé ce que la fixation de transport (2) fabriquée selon le procédé de sérigraphie est monté sur une surface de gaine extérieure de l'arbre à cames (1), sur une surface latérale de palier d'un palier (4) de l'arbre à cames (1), sur une surface de palier intérieure du palier (4) de l'arbre à cames (1) ou sur une surface latérale d'une came (3).

8. Arbre à cames selon une des revendications 1 à 4, caractérisé ce que au moins une fixation de transport (2) est conçu comme une colle sensible à la chaleur et/ou présentant une pâte à papier soluble dans l'huile, par l'intermédiaire de laquelle l'arbre à cames (1) est notamment collé à un palier (4).

9. Moteur à combustion interne comportant un arbre à cames (1) selon une des revendications 1 à 8.
